(19) Europäisches Patentamt European Patent Office Office européen des brevets

(11) **EP 4 080 638 A1**

(12) **EUROPEAN PATENT APPLICATION**
published in accordance with Art. 153(4) EPC

(43) Date of publication:
26.10.2022 Bulletin 2022/43

(21) Application number: 21864671.9

(22) Date of filing: 02.09.2021

(51) International Patent Classification (IPC):
$H01M\ 10/0569^{(2010.01)}$    $H01M\ 10/0568^{(2010.01)}$
$H01M\ 10/0567^{(2010.01)}$    $H01M\ 4/38^{(2006.01)}$
$H01M\ 4/48^{(2010.01)}$    $H01M\ 10/052^{(2010.01)}$

(52) Cooperative Patent Classification (CPC):
H01M 4/38; H01M 4/48; H01M 10/052;
H01M 10/0567; H01M 10/0568; H01M 10/0569;
Y02E 60/10; Y02P 70/50

(86) International application number:
PCT/KR2021/011832

(87) International publication number:
WO 2022/050712 (10.03.2022 Gazette 2022/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.09.2020 KR 20200112457

(71) Applicant: LG Energy Solution, Ltd.
Seoul 07335 (KR)

(72) Inventors:
- KIM, Hyun Seung
  Daejeon 34122 (KR)
- HWANG, Seung Hae
  Daejeon 34122 (KR)
- LEE, Chul Haeng
  Daejeon 34122 (KR)
- OH, Jeong Woo
  Daejeon 34122 (KR)

(74) Representative: Hoffmann Eitle
Patent- und Rechtsanwälte PartmbB
Arabellastraße 30
81925 München (DE)

(54) **LITHIUM SECONDARY BATTERY**

(57) The present invention relates to a lithium secondary battery which includes a positive electrode including a positive electrode active material, a negative electrode including a negative electrode active material, a separator disposed between the positive electrode and the negative electrode, and a non-aqueous electrolyte solution, wherein the non-aqueous electrolyte solution includes a lithium salt including $LiPF_6$ and $LiN(FSO_2)_2$, an additive including a sultone-based compound, and an organic solvent including a non-fluorine-based linear carbonate solvent and a fluorine-based cyclic carbonate solvent, and the negative electrode active material consists of a silicon-based material.

[FIG. 1]

EP 4 080 638 A1

**Description**

## TECHNICAL FIELD

This application claims priority from Korean Patent Application No. 10-2020-0112457, filed on September 3, 2020, the disclosure of which is incorporated by reference herein.

The present invention relates to a lithium secondary battery, and more particularly, to a lithium secondary battery in which life characteristics are improved by strengthening stability of an electrode film.

## BACKGROUND ART

Recently, demand for high-capacity, high-output, and high-stability secondary batteries has been increased as an application area of lithium secondary batteries has rapidly expanded to power storage supply of large-area devices, such as automobiles and power storage devices, as well as electricity, electronics, communication, and power supply of electronic devices such as computers.

The lithium secondary battery is generally manufactured by a method in which a positive electrode and a negative electrode are manufactured by applying a positive electrode active material composed of a lithium-containing transition metal oxide or the like or a carbonaceous or silicon-based negative electrode active material capable of intercalating and deintercalating lithium ions, and a material of mixing a binder and a conductive material selectively to a positive electrode current collector and a negative electrode current collector, respectively, the positive and negative electrodes are stacked on both sides of a separator to form an electrode assembly having a predetermined shape, and then is inserted into a battery case with a non-aqueous electrolyte solution. Furthermore, it is required to undergo formation and aging processes almost necessarily in order to secure the performance of the battery.

The formation process is a step of activating the secondary battery by repeating charge and discharge after assembly of the battery, wherein lithium ions deintercalated from the lithium-containing transition metal oxide used as the positive electrode move and are intercalated into the carbon negative electrode active material used as the negative electrode during the charge. In this case, the highly reactive lithium ions react with an electrolyte to form compounds such as $Li_2CO_3$, $Li_2O$, and $LiOH$, and these compounds form a solid electrolyte interface (SEI) on a surface of the electrode. The formation of the SEI is an important factor because the SEI closely affects maintaining of lifetime and capacity.

The SEI needs to be formed so as to be robust and have low resistance. Also, since the SEI may be gradually collapsed during high-temperature storage to cause a problem such as electrode exposure, various attempts have been made to enhance life characteristics of a lithium ion battery by improving stability of the SEI.

## DISCLOSURE OF THE INVENTION

### TECHNICAL PROBLEM

An aspect of the present invention provides a lithium secondary battery in which a durability problem of a negative electrode and a solid electrolyte interface (SEI) due to a large volume change of a silicon-based negative electrode active material is improved.

### TECHNICAL SOLUTION

According to an aspect of the present invention, there is provided a lithium secondary battery including: a positive electrode including a positive electrode active material; a negative electrode including a negative electrode active material; a separator disposed between the positive electrode and the negative electrode; and a non-aqueous electrolyte solution,

wherein the non-aqueous electrolyte solution includes a lithium salt including $LiPF_6$ and $LiN(FSO_2)_2$; an additive including a sultone-based compound; and an organic solvent including a non-fluorine-based linear carbonate solvent and a fluorine-based cyclic carbonate solvent, and
the negative electrode active material consists of a silicon-based material.

## ADVANTAGEOUS EFFECTS

Since a lithium ion battery according to the present invention includes a solid electrolyte interface (SEI) richly containing a fluorine component on a surface of a silicon-based negative electrode, it may secure high capacity and may have excellent life characteristics at the same time.

## BRIEF DESCRIPTION OF THE DRAWINGS

FIG. 1 is a graph illustrating capacity retentions during 50 cycles of lithium secondary batteries prepared in Example 1 and Comparative Examples 1, 5, and 6;
FIG. 2 is a graph illustrating capacity retentions during 11 cycles of lithium secondary batteries prepared in Comparative Examples 2 to 4; and
FIG. 3 is a graph illustrating capacity retentions during 100 cycles of the lithium secondary batteries prepared in Example 1 and Comparative Example 6.

## MODE FOR CARRYING OUT THE INVENTION

Hereinafter, the present invention will be described in more detail.

A silicon-based material among negative electrode materials for a lithium ion battery is advantageous in that capacity per weight is excellent, but, since a volume change is very large according to a reaction of a silicon-based negative electrode and lithium to form an alloy, such as charge in a battery, there is a problem in that the negative electrode itself is not only cracked, but a solid electrolyte interface (SEI), which is a protective film formed on a surface of the negative electrode, is also destroyed.

In a case in which the SEI is destroyed, life characteristics of the battery may be degraded due to consumption of lithium ions and an increase in resistance as an electrolyte solution is continuously decomposed, wherein the present inventors solved the above-described problem by adjusting a lithium salt and a type of an organic solvent, which are included in the electrolyte solution, to form an SEI richly containing a fluorine component on the negative electrode.

Specifically, LiF and a carbonate-based component in the SEI were increased by mixed introduction of $LiPF_6$ and LiFSI, stability and mechanical properties of the SEI were improved by increasing a nitrogen (N), sulfur (S)-based material of inorganic component through decomposition of $FSI^-$, and accordingly, it was confirmed that capacity retention of the battery was improved by reducing irreversibility in the battery by forming an initially stable interface. Also, since stability of the formed SEI was increased through introduction of DEC, irreversible capacity of the lithium ion battery was reduced and the resistance was decreased to ultimately improve the life characteristics.

In addition, it has been found that, when a sultone-based compound is used as an additive in the non-aqueous electrolyte solution, there is not only an effect of stabilizing the unstable SEI of the Si negative electrode, but a stable film in the form of $Li_2SO_3$ may also be formed on a positive electrode to prevent an SEI and cathode electrolyte interface (CEI) collapse phenomenon that occurs during high-temperature storage. As a result, an amount of gas generated may be reduced by suppressing decomposition of an electrolyte at a positive/negative electrode interface, and capacity retention and resistance increase rate may be improved by controlling a consumption reaction of lithium.

In an embodiment of the present invention, the lithium ion battery includes a positive electrode including a positive electrode active material; a negative electrode including a negative electrode active material; a separator disposed between the positive electrode and the negative electrode; and a non-aqueous electrolyte solution, and a description of each component is as follows.

## (1) Non-aqueous Electrolyte Solution

The non-aqueous electrolyte solution of the present invention includes a lithium salt including $LiPF_6$ and $LiN(FSO_2)_2$ (LiFSI); an additive including a sultone-based compound; and an organic solvent including a non-fluorine-based linear carbonate solvent and a fluorine-based cyclic carbonate solvent.

## (a) Lithium Salt

In an embodiment of the present invention, in a case in which $LiN(FSO_2)_2$ (LiFSI) is included together with $LiPF_6$ as the lithium salt, it is effective to form an SEI rich in a carbonate component, N, and S in comparison to a simple $LiPF_6$-based SEI. Specifically, since a LiF component is additionally formed when LiFSI is used together with $LiPF_6$, it is desirable in that the interface of the negative electrode is stabilized even at a high temperature.

In an embodiment of the present invention, the lithium salt may further include an additional lithium salt in addition to the $LiPF_6$ and the $LiN(FSO_2)_2$. Specifically, the lithium salt may further include a lithium salt including $Li^+$, as a cation, and including any one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_4^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $BF_2C_2O_4^-$, $BC_4O_8^-$

, $BF_2C_2O_4CHF^-$, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$ as an anion.

A concentration of the lithium salt in the non-aqueous electrolyte solution may be in a range of 0.5 M to 3.0 M, for example, 0.5 M to 2.0 M. In a case in which the concentration of the lithium salt satisfies the above range, output characteristics of the battery may be improved by improving a lithium ion yield ($Li^+$ transference number) and a degree of dissociation of the lithium ions.

In a case in which the concentration of the lithium salt is 0.5 M or more, since mobility of the lithium ions may be sufficiently secured, an effect of improving low-temperature output and improving cycle characteristics during high-temperature storage is obtained, and, in a case in which the concentration of the lithium salt is 3.0 M or less, it is desirable in terms of viscosity. That is, since the viscosity of the non-aqueous electrolyte solution is appropriately obtained, a film-forming effect may be sufficiently exhibited by preventing a reduction in impregnability.

A molar ratio of the $LiPF_6$ to the $LiN(FSO_2)_2$ in the non-aqueous electrolyte solution may be in a range of 1:1 to 1:3, for example, 1:1.5 to 1:2.5. When the molar ratio of the $LiPF_6$ to the $LiN(FSO_2)_2$ is within the above range, it is desirable in terms of preventing corrosion of the positive electrode and battery degradation due to decomposition products. Specifically, when the ratio of the $LiPF_6$ becomes higher than the above ratio, $PF_5$ and HF, which are Lewis acids, are formed due to a decomposition reaction of the $LiPF_6$ salt in the presence of high temperature and moisture, and, as a result, since the negative electrode interface and positive electrode interface are etched to cause electrolyte side reactions in the battery, the battery degradation may occur. Also, in a case in which the ratio of the $LiN(FSO_2)_2$ is higher than the above ratio, an effect of inhibiting aluminum (Al) corrosion at the positive electrode may be reduced due to the lack of the $LiPF_6$.

**(b) Organic Solvent**

In an embodiment of the present invention, the organic solvent includes a non-fluorine-based linear carbonate solvent and a fluorine-based cyclic carbonate solvent. The fluorine-based cyclic carbonate solvent is advantageous in that it may form LiF and a robust SEI having excellent electrochemical stability and high mechanical properties.

With respect to a linear carbonate solvent, a non-fluorine-based solvent is advantageous in that ionic conductivity is higher than that of a fluorine-based solvent. For example, the ionic conductivity is improved from 3.39 mS/cm to 6.09 mS/cm as the salt and additive are the same and only the solvent is changed from FEC/FEMC (volume ratio of 1/9) to FEC/DEC (volume ratio of 1/9).

Preferably, the organic solvent of the present invention may consist of a non-fluorine-based linear carbonate solvent and a fluorine-based cyclic carbonate solvent.

The non-fluorine-based linear carbonate solvent is an organic solvent having low viscosity and low permittivity, wherein the non-fluorine-based linear carbonate solvent may be at least one selected from dimethyl carbonate (DMC), diethyl carbonate (DEC), dipropyl carbonate, ethyl methyl carbonate (EMC), methylpropyl carbonate, and ethylpropyl carbonate, and may be preferably diethyl carbonate. Since an SEI derived from the diethyl carbonate has a low rate of destruction during charge and discharge due to high stability, it may improve lifetime of the battery by reducing an additional electrolyte decomposition reaction (irreversible capacitive consumption reaction) caused by the SEI that is continuously destroyed in the battery.

The fluorine-based cyclic carbonate solvent may be at least one selected from fluoroethylene carbonate (FEC), difluoroethylene carbonate (DFEC), trifluoroethylene carbonate, tetrafluoroethylene carbonate, 3,3,3-trifluoropropylene carbonate, and 1-fluoropropylene carbonate, and preferably, may be fluoroethylene carbonate. Since the fluoroethylene carbonate, among fluorine-based cyclic carbonates, has the best ability to form a polymeric SEI resistant to LiF and mechanical stress at the negative electrode, it may reduce additional irreversible capacity consumption by increasing the stability of the SEI, and thus, it is effective to improve the life characteristics of the battery.

A volume ratio of the non-fluorine-based linear carbonate solvent to the fluorine-based cyclic carbonate solvent may be in a range of 70:30 to 95:5, for example, 85:15 to 95:5. In a case in which the volume ratio of the non-fluorine-based linear carbonate solvent to the fluorine-based cyclic carbonate solvent is included in the above range, since generation of gas derived from the FEC at high temperatures is suppressed and reduction stability and oxidation stability of the solvent are increased, there is an effect of suppressing the irreversible capacity consumption due to the decomposition of the electrolyte in the battery.

All except an amount of other components excluding the organic solvent, for example, the lithium salt and additive, in a total weight of the non-aqueous electrolyte solution may be the organic solvent unless otherwise specified.

**(c) Additive**

The non-aqueous electrolyte solution included in the lithium secondary battery of the present invention includes a sultone-based compound as an additive. The sultone-based compound is a material capable of forming a stable SEI on a surface of the negative electrode by a reduction reaction, wherein the sultone-based compound may be at least one compound selected from 1,3-propane sultone (PS), 1,4-butane sultone, ethane sultone, 1,3-propene sultone (PRS), 1,4-butene sultone, and 1-methyl-1,3-propene sultone, and may be preferably 1,3-propane sultone (PS).

In an embodiment of the present invention, the sultone-based compound may be included in an amount of 0.1 wt% to 3 wt%, for example, 0.1 wt% to 1 wt%, based on the total weight of the non-aqueous electrolyte solution. When the amount of the sultone-based compound is within the above range, a stable film may not only be formed on the negative electrode, but also a stable film shape may be maintained by continuously compensating for the CEI on the positive electrode.

Also, in order to prevent the non-aqueous electrolyte solution from being decomposed to cause collapse of the electrode in a high-voltage environment, or further improve low-temperature high-rate discharge characteristics, high-temperature stability, overcharge protection, and a battery swelling suppression effect at high temperatures, the following additives may be optionally further included in the non-aqueous electrolyte solution, if necessary.

For example, at least one additive selected from a cyclic carbonate-based compound, a halogen-substituted carbonate-based compound, a sultone-based compound, a sulfate-based compound, a phosphate-based or phosphite-based compound, a borate-based compound, a nitrile-based compound, an amine-based compound, a silane-based compound, a benzene-based compound, and a lithium salt-based compound may be further included.

The cyclic carbonate-based compound may be at least one selected from vinylene carbonate (VC) and vinyl ethylene carbonate, and may be specifically vinylene carbonate. In a case in which the cyclic carbonate-based compound is included as the additive, an amount of the cyclic carbonate-based compound may be in a range of less than 4 wt%, for example, 0.1 wt% to 3 wt% based on the total weight of the non-aqueous electrolyte solution.

The halogen-substituted carbonate-based compound may be fluoroethylene carbonate (FEC).

The sulfate-based compound is a material capable of forming a stable SEI, which does not crack even during high-temperature storage, by being electrically decomposed on the surface of the negative electrode, wherein the sulfate-based compound may be at least one selected from ethylene sulfate (Esa), trimethylene sulfate (TMS), or methyl trimethylene sulfate (MTMS).

The phosphate-based or phosphite-based compound may be at least one selected from lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite.

The borate-based compound may be at least one selected from lithium tetraphenylborate and lithium difluoro(oxalato)borate (LiODFB).

The nitrile-based compound may be at least one selected from succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may specifically be at least one selected from 2-fluorobenzonitrile, 4-fluorobenzonitrile, difluorobenzonitrile, and trifluorobenzonitrile which contain a fluorine component.

The amine-based compound may be at least one selected from triethanolamine and ethylenediamine, and the silane-based compound may be tetravinylsilane.

The benzene-based compound may be at least one selected from monofluorobenzene, difluorobenzene, trifluorobenzene, and tetrafluorobenzene.

The lithium salt-based compound is a compound different from the lithium salt included in the non-aqueous electrolyte solution, wherein the lithium salt-based compound may be at least one compound selected from $LiPO_2F_2$, LiODFB, LiBOB (lithium bisoxalatoborate (LiB$(C_2O_4)_2$), and lithium tetrafluoroborate (LiBF$_4$).

The additives other than the sultone-based compound in the non-aqueous electrolyte solution may be used alone or as a mixture of two or more thereof, and an amount of the additive may be in a range of 0.1 wt% to 10 wt%, for example, 1 wt% to 5 wt% based on the total weight of the non-aqueous electrolyte solution. In a case in which the amount of the additive is less than 0.1 wt%, effects of improving low-temperature capacity, high-temperature storage characteristics, and high-temperature life characteristics of the battery are insignificant, and, in a case in which the amount of the additive is greater than 10 wt%, there is a possibility that a side reaction in the electrolyte solution occurs excessively during charge and discharge of the battery. Particularly, since the additives for forming an SEI may not be sufficiently decomposed at high temperatures when excessive amounts of the additives for forming an SEI are added, the additives for forming an SEI may be present in the form of an unreacted material or precipitates in the electrolyte solution at room temperature. Accordingly, a side reaction may occur in which life or resistance characteristics of the battery are degraded.

## (2) Positive Electrode

The positive electrode according to the present invention includes a positive electrode active material, and may be prepared by coating a positive electrode collector with a positive electrode slurry including the positive electrode active material, a binder, a conductive agent, and a solvent, and then drying and rolling the coated positive electrode collector.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may be at least one selected from LCO ($LiCoO_2$) ; LNO ($LiNiO_2$) ; LMO ($LiMnO_2$); $LiMn_2O_4$, $LiCoPO_4$; LFP ($LiFePO_4$); and a lithium composite transition metal oxide including nickel (Ni), cobalt (Co), and manganese (Mn).

In an embodiment of the present invention, the lithium composite transition metal oxide may be at least one selected from $LiNiCoMnO_2$; $LiNi_{1-x-y-z}Co_xM^1_yM^2_zO_2$ (where $M^1$ and $M^2$ are each independently any one selected from the group consisting of aluminum (Al), nickel (Ni), cobalt (Co), iron (Fe), manganese (Mn), vanadium (V), chromium (Cr), titanium (Ti), tungsten (W), tantalum (Ta), magnesium (Mg), and molybdenum (Mo), and x, y, and z are each independently an atomic fraction of oxide composition elements, wherein $0 \leq x<0.5$, $0 \leq y<0.5$, $0 \leq_z<0.5$, x+y+z=1); and a compound represented by the following Formula 1. Specifically, the positive electrode active material may include a lithium composite transition metal oxide represented by Formula 1 below.

$$[\text{Formula 1}] \qquad Li_{1+x}(Ni_aCo_bMn_cM_d)O_2$$

In Formula 1,

M is at least one selected from the group consisting of W, copper (Cu), Fe, V, Cr, Ti, zirconium (Zr), zinc (Zn), Al, indium (In), Ta, yttrium (Y), lanthanum (La), strontium (Sr), gallium (Ga), scandium (Sc), gadolinium (Gd), samarium (Sm), calcium (Ca), cerium (Ce), niobium (Nb), Mg, boron (B), and Mo, and
1+x, a, b, c, and d are atomic fractions of each independent element,
wherein $0 \leq x \leq 0.2$, $0.50 \leq a \leq 0.90$, $0<b \leq 0.25$, $0<c \leq 0.25$, $0 \leq d \leq 0.1$, and a+b+c+d=1.

Preferably, a, b, c, and d in Formula 1 may satisfy $0.70 \leq a \leq 0.90$, $0.05 \leq b \leq 0.15$, $0.05 \leq c \leq 0.15$, and $0 \leq d \leq 0.05$, respectively.

More preferably, a, b, c, and d in Formula 1 may satisfy $0.80 \leq a \leq 0.90$, $0.05 \leq b \leq 0.15$, $0.05 \leq c \leq 0.15$, and $0 \leq d \leq 0.03$, respectively.

The positive electrode active material may be included in an amount of 80 wt% to 99 wt%, for example, 90 wt% to 99 wt%, based on a total weight of solid content in the positive electrode slurry. In this case, when the amount of the positive electrode active material is 80 wt% or less, energy density may be decreased to reduce capacity.

The binder is a component that assists in the binding between the active material and the conductive agent and in the binding with the current collector, wherein the binder is commonly added in an amount of 1 wt% to 30 wt% based on the total weight of the solid content in the positive electrode slurry. Examples of the binder may be polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene termonomer, a styrene-butadiene rubber, or a fluorine rubber.

Also, the conductive agent is a material that imparts conductivity without causing adverse chemical changes in the battery, wherein the conductive agent may be added in an amount of 1 wt% to 20 wt% based on the total weight of the solid content in the positive electrode slurry.

Examples of the conductive agent may be a conductive material, such as: carbon black such as acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry including the positive electrode active material, the binder, and the conductive agent is in a range of 10 wt% to 60 wt%, for example, 20 wt% to 50 wt%.

### (3) Negative Electrode

The negative electrode according to the present invention includes a negative electrode active material, and may be prepared by coating a negative electrode collector with a negative electrode slurry including the negative electrode active material, a binder, a conductive agent, and a solvent, and then drying and rolling the coated negative electrode collector.

The negative electrode collector generally has a thickness of 3 $\mu$m to 500 $\mu$m. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

In the present invention, the negative electrode active material consists of a silicon-based material. Since the silicon-based negative electrode has a capacity nearly 10 times higher than that of graphite, it may improve rapid charging performance of the battery by reducing mass loading (mg·cm$^{-2}$). However, the silicon-based negative electrode has a problem in that a change in volume is large during charge and discharge, and, when the above-described non-aqueous electrolyte solution of the present invention is used, this problem may be solved.

The silicon-based material is at least one selected from silicon (Si) and SiO$_x$ (0<x<2), and is preferably Si. With respect to the Si, since it has a theoretical capacity of about 3,600 mAh/g, the rapid charging performance will be better than that of SiO having a theoretical capacity of about 1,500 mAh/g.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer, a styrene-butadiene rubber, or a fluorine rubber.

The conductive agent is a component for further improving the conductivity of the negative electrode active material, wherein the conductive agent may be added in an amount of 1 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon black such as acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives, may be used.

The solvent of the negative electrode slurry may include water; or an organic solvent, such as NMP and alcohol, and may be used in an amount such that desirable viscosity is obtained when the negative electrode active material, the binder, and the conductive agent are included. For example, the solvent may be included in an amount such that a concentration of the solid content in the slurry including the negative electrode active material, the binder, and the conductive agent is in a range of 50 wt% to 75 wt%, for example, 50 wt% to 65 wt%.

**(4) Separator**

The lithium secondary battery according to the present invention includes a separator between the positive electrode and the negative electrode.

The separator separates the positive electrode and the negative electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may be used. Also, a typical porous nonwoven fabric, for example, a nonwoven fabric composed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be used.

The lithium secondary battery according to the present invention as described above may be suitably used in portable devices, such as mobile phones, notebook computers, and digital cameras; and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); and a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

**<Example and Comparative Examples: Preparation of Lithium Secondary Battery**

**Example 1.**

(1) Preparation of Non-aqueous Electrolyte Solution

After diethyl carbonate (DEC) and fluoroethylene carbonate (FEC) were mixed in a volume ratio of 90:10, a mixed organic solvent was prepared by dissolving 0.5 M $LiPF_6$ and 1.0 M $LiN(SO_2F)_2$ (LiFSI) . A non-aqueous electrolyte solution for a lithium secondary battery was prepared by mixing 3 g of vinylene carbonate (VC) and 0.5 g of 1,3-propane sultone (PS) in 96.5 g of the mixed organic solvent.

(2) Preparation of Lithium Secondary Battery

A positive electrode active material ($LiNi_{0.8}Co_{0.1}Mn_{0.1}O_2$: NCM811), a conductive agent (carbon black), and a binder (polyvinylidene fluoride) were added to N-methyl-2-pyrrolidone (NMP) in a weight ratio of 97.5:1:1.5 to prepare a positive electrode slurry (solid content: 50 wt%). A 15 $\mu$m thick aluminum (Al) thin film, as a positive electrode collector, was coated with the positive electrode slurry, dried, and then roll-pressed to prepare a positive electrode.

A negative electrode active material (Si 100 wt%), a binder (SBR-CMC), and a conductive agent (carbon black) were added to water, as a solvent, in a weight ratio of 95:3.5:1.5 to prepare a negative electrode slurry (solid content: 60 wt%). A 6 $\mu$m thick copper (Cu) thin film, as a negative electrode collector, was coated with the negative electrode slurry, dried, and then roll-pressed to prepare a negative electrode.

**Comparative Example 1.**

(1) Preparation of Non-aqueous Electrolyte Solution

A non-aqueous electrolyte solution for a lithium secondary battery was prepared by mixing ethylene carbonate (EC) and ethylmethyl carbonate (EMC) in a volume ratio of 30:70 and then dissolving 1.0 M $LiPF_6$.

(2) Preparation of Lithium Secondary Battery

A lithium secondary battery was prepared in the same manner as in Example 1 except that the above non-aqueous electrolyte solution was used.

**Comparative Example 2.**

(1) Preparation of Non-aqueous Electrolyte Solution

A non-aqueous electrolyte solution was prepared in the same manner as in Comparative Example 1.

(2) Preparation of Lithium Secondary Battery

A positive electrode active material ($LiNi_{0.8}Co_{0.1}Mn_{0.1}O_2$: NCM811), a conductive agent (carbon black), and a binder (polyvinylidene fluoride) were added to N-methyl-2-pyrrolidone (NMP) in a weight ratio of 97.5:1:1.5 to prepare a positive electrode slurry (solid content: 50 wt%). A 15 $\mu$m thick aluminum (Al) thin film, as a positive electrode collector, was coated with the positive electrode slurry, dried, and then roll-pressed to prepare a positive electrode.

A negative electrode active material (graphite:SiO=weight ratio of 94.5:5.5), a binder (SBR-CMC), and a conductive agent (carbon black) were added to water, as a solvent, in a weight ratio of 95:3.5:1.5 to prepare a negative electrode slurry (solid content: 60 wt%). A 6 $\mu$m thick copper (Cu) thin film, as a negative electrode collector, was coated with the negative electrode slurry, dried, and then roll-pressed to prepare a negative electrode.

An electrode assembly was prepared by sequentially stacking the positive electrode, a polyolefin-based porous separator coated with inorganic particles ($Al_2O_3$), and the negative electrode.

A lithium secondary battery was prepared by accommodating the assembled electrode assembly in a pouch-type battery case, and injecting the non-aqueous electrolyte solution for a lithium secondary battery.

## Comparative Example 3.

### (1) Preparation of Non-aqueous Electrolyte Solution

A non-aqueous electrolyte solution was prepared in the same manner as in Example 1.

### (2) Preparation of Lithium Secondary Battery

A lithium secondary battery was prepared in the same manner as in Comparative Example 2 except that the above non-aqueous electrolyte solution was used.

## Comparative Example 4.

### (1) Preparation of Non-aqueous Electrolyte Solution

After diethyl carbonate (DEC), fluoroethylene carbonate (FEC), and propylene carbonate (PC) were mixed in a volume ratio of 80:10:10, a mixed organic solvent was prepared by dissolving 0.5 M $LiPF_6$ and 1.0 M $LiN(SO_2F)_2$ (LiFSI). A non-aqueous electrolyte solution for a lithium secondary battery was prepared by mixing 3 g of vinylene carbonate (VC) and 0.5 g of 1,3-propane sultone (PS) in 96.5 g of the mixed organic solvent.

### (2) Preparation of Lithium Secondary Battery

A lithium secondary battery was prepared in the same manner as in Comparative Example 2 except that the above non-aqueous electrolyte solution was used.

## Comparative Example 5.

### (1) Preparation of Non-aqueous Electrolyte Solution

After diethyl carbonate (DEC) and fluoroethylene carbonate (FEC) were mixed in a volume ratio of 70:30, a mixed organic solvent was prepared by dissolving 1.0 M $LiPF_6$. A non-aqueous electrolyte solution for a lithium secondary battery was prepared by mixing 2 g of 1,3-propane sultone (PS) in 98 g of the mixed organic solvent.

### (2) Preparation of Lithium Secondary Battery

A lithium secondary battery was prepared in the same manner as in Example 1 except that the above non-aqueous electrolyte solution was used.

## Comparative Example 6.

### (1) Preparation of Non-aqueous Electrolyte Solution

After diethyl carbonate (DEC) and fluoroethylene carbonate (FEC) were mixed in a volume ratio of 90:10, a mixed organic solvent was prepared by dissolving 1.5 M $LiPF_6$. A non-aqueous electrolyte solution for a lithium secondary battery was prepared by mixing 3 g of vinylene carbonate (VC) and 0.5 g of 1,3-propane sultone (PS) in 96.5 g of the mixed organic solvent.

(2) Preparation of Lithium Secondary Battery

A lithium secondary battery was prepared in the same manner as in Example 1 except that the above non-aqueous electrolyte solution was used.

**Comparative Example 7.**

(1) Preparation of Non-aqueous Electrolyte Solution

After diethyl carbonate (DEC) and fluoroethylene carbonate (FEC) were mixed in a volume ratio of 90:10, a mixed organic solvent was prepared by dissolving 0.5 M $LiPF_6$ and 1.0 M $LiN(SO_2F)_2$ (LiFSI) . A non-aqueous electrolyte solution for a lithium secondary battery was prepared by mixing 3 g of vinylene carbonate (VC) and 0.5 g of fluorobenzene (FB) in 96.5 g of the mixed organic solvent.

(2) Preparation of Lithium Secondary Battery

A lithium secondary battery was prepared in the same manner as in Example 1 except that the above non-aqueous electrolyte solution was used.

Materials used in Example 1 and Comparative Examples 1 to 7 are summarized and presented in Table 1 below.

[Table 1]

| | Organic solvent (volume ratio) | Additi ve | Lithium salt | Negative electrode active material (weight ratio) |
|---|---|---|---|---|
| Example 1 | DEC(90)+FEC(10) | VC+PS | $LiPF_6$+LiFSI | Si(100) |
| Comparative Example 1 | EC(30)+EMC(70) | - | $LiPF_6$ | Si(100) |
| Comparative Example 2 | EC(30)+EMC(70) | - | $LiPF_6$ | Graphite(94.5)+SiO(5.5 ) |
| Comparative Example 3 | DEC(90)+FEC(10) | VC+PS | $LiPF_6$+LiFSI | Graphite(94.5)+SiO(5.5 ) |
| Comparative Example 4 | DEC(80)+FEC(10)+PC (1 0) | VC+PS | $LiPF_6$+LiFSI | Graphite(94.5)+SiO(5.5 ) |
| Comparative Example 5 | DEC(70)+FEC(30) | PS | $LiPF_6$ | Si(100) |
| Comparative Example 6 | DEC(90)+FEC(10) | VC+PS | $LiPF_6$ | Si(100) |
| Comparative Example 7 | DEC(90)+FEC(10) | VC+FB | $LiPF_6$+LiFSI | Si(100) |

**<Experimental Examples: Performance Evaluation of Lithium Secondary Battery**

**Experimental Example 1.**

The lithium secondary batteries prepared in Example 1 and Comparative Examples 1, 5, and 6 each were subjected to a formation process by being charged to a state of charge (SOC) of 30% at 0.1 C rate for 3 hours at 25°C, then charged at a rate of 1.0 C to 4.2 V under a CC-CV (constant current-constant voltage) condition at 25°C, and discharged at 0.5 C rate to 3.0 V under a CC condition. The above charging and discharging were set as one cycle, and 3 cycles of initial charge and discharge were performed.

Subsequently, each of the initially charged and discharged lithium secondary batteries was charged at 1.0 C rate to 4.2 V under a CC-CV condition, and was discharged at 0.5 C rate to 3.0 V under a CC condition. The above charging and discharging were set as one cycle, and a cycle test was performed at 25°C.

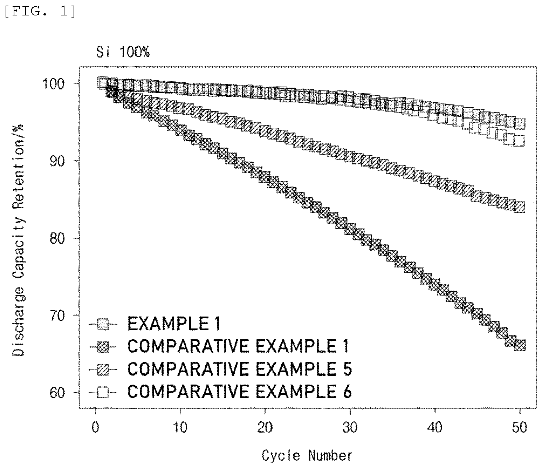

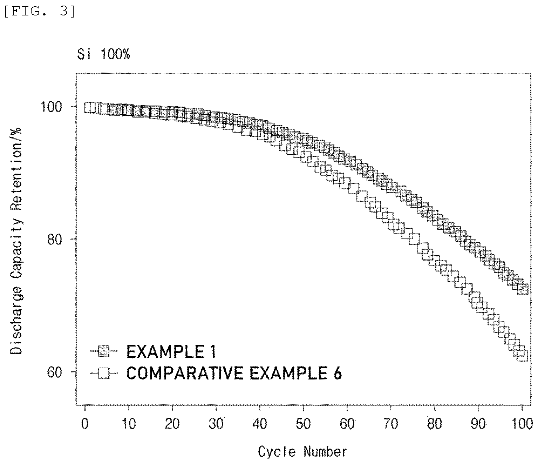

In this case, discharge capacity was measured for every cycle, and a measured value was substituted into the following Equation 1 to calculate a capacity retention. The results thereof are presented in FIGS. 1 and 3 below.

[Equation 1]

Capacity retention (%) = (discharge capacity in every cycle/discharge capacity after initial charge and discharge)×100

Referring to FIG. 1, it may be confirmed that capacity retention of Example 1 during 50 cycles was better than those of Comparative Examples 1, 5, and 6. With respect to Comparative Example 1, since conventional EC and EMC were used as the solvent, it may be confirmed that the capacity retention was rapidly decreased when the negative electrode active material of 100% silicon-based material was used. In contrast, in a case in which the solvent of a combination of FEC/DEC was used as in Example 1, since a surface of the Si-based negative electrode contained more LiF component than the solvent of the combination of EC/EMC and an initial interface with high stability was formed, discharge capacity retention may be increased by suppressing irreversible capacity consumption in the battery. Also, since reduction stability of DEC was higher than that of EMC, electrolyte decomposition on an additionally exposed Si surface was small, and thus, an effect of suppressing the irreversible capacity consumption was added.

In addition, it may be confirmed through FIG. 3 that a higher capacity retention was exhibited in the same 100 cycle when the mixed salt of the combination of $LiPF_6$/LiFSI (Example 1) was used in comparison to the lithium salt of $LiPF_6$ alone (Comparative Example 6) in the same solvent composition. The reason for this is that, since interfacial stability was increased by increasing N, S-based inorganic film component and carbonate-based component on the Si surface through the additional introduction of LiFSI, additional irreversible capacity consumption was suppressed.

Furthermore, when comparing Comparative Example 5 and Comparative Example 6 in which $LiPF_6$ was used alone as the lithium salt, it may be confirmed that the capacity retention of Comparative Example 6, in which DEC and FEC were mixed in a ratio of 90:10, was better than that of Comparative Example 5 in which DEC and FEC were mixed in a ratio of 70:30. The reason for this is that, when the ratio of the FEC was high, since the FEC met $PF_5$, a decomposition product of the salt in the battery, and generated $CO_2$ gas through a side reaction to cause an increase in resistance in the battery, capacity expression was suppressed.

That is, it may be confirmed that the capacity retention of Example 1, in which DEC and FEC were mixed in a volume ratio of 90:10 and $LiPF_6$ and LiFSI were used together as the lithium salt, was the best.

**Experimental Example 2.**

The lithium secondary batteries prepared in Comparative Examples 2 to 4 each were subjected to a formation process by being charged to an SOC of 30% at 0.1 C rate for 3 hours at 25°C, then charged at a rate of 1.0 C to 4.2 V under a CC-CV (constant current-constant voltage) condition at 25°C, and discharged at 0.5 C rate to 3.0 V under a CC condition. The above charging and discharging were set as one cycle, and 3 cycles of initial charge and discharge were performed.

Subsequently, each of the initially charged and discharged lithium secondary batteries was charged at 1.0 C rate to 4.2 V under a CC-CV condition, and was discharged at 0.5 C rate to 3.0 V under a CC condition. The above charging and discharging were set as one cycle, and 11 cycles were performed at 25°C.

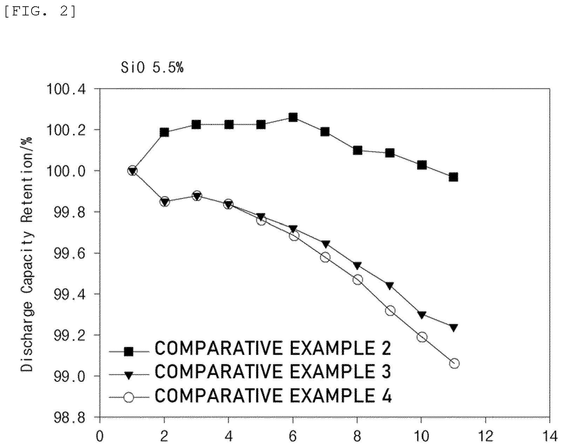

In this case, discharge capacity was measured for every cycle, and a measured value was substituted into the following Equation 1 to calculate a capacity retention. The results thereof are presented in FIG. 2 below.

[Equation 1]

Capacity retention (%) = (discharge capacity in every cycle/discharge capacity after initial charge and discharge)×100

Referring to FIG. 2, it may be confirmed that the capacity retention was not reduced in Comparative Example 2. When considering that, with respect to Comparative Example 2, only the negative electrode active material was changed from Comparative Example 1, a decrease in the capacity retention of Comparative Example 1 in Experimental Example 1 was due to the fact that, with respect to the negative electrode with a 100% silicon-based composition, since a change in volume during charge and discharge was large, an electrolyte side reaction on the surface of the negative electrode was severe, and thus, capacity degradation was greater than that of the negative electrode of a combination of graphite/silicon. However, since the present invention compensates for this problem through the LiPF$_6$ (or a combination of LiPF$_6$ and LiFSI) salt and the mixed solvent of FEC/DEC, excellent capacity retention may be exhibited even in the 100% silicon-based composition with the severe side reaction on the surface of the electrode due to the significant volume change of the electrode.

When considering that cycle characteristics were rather degraded in Comparative Examples 3 and 4 in comparison to Comparative Example 2, it may be confirmed that the mixed salt of LiPF$_6$ and LiFSI and the mixed solvent of FEC/DEC, which were proposed in this patent, did not have an effect of improving life characteristics in the negative electrode of the combination of graphite/silicon.

This shows that the non-aqueous electrolyte solution proposed in the present invention has a special effect only on a combination with the negative electrode active material composed of the silicon-based material.

**Experimental Example 3.**

Each of the lithium secondary batteries prepared in Example 1 and Comparative Example 7 was fully charged to an SOC of 100% at 0.33 C to 4.2 V (0.05 C cut off) under a CC/CV condition at 25°C. Thereafter, after the fully charged lithium secondary battery was stored at a high temperature (60°C) for 8 weeks, capacity retention, resistance increase rate, and volume increase rate were measured, and the results thereof are presented in Table 2 below.

In this case, the capacity retention was calculated by substituting discharge capacity of the lithium secondary battery measured before high-temperature storage using PNE-0506 charge/discharge equipment (manufacturer: PNE SOLUTION Co., Ltd., 5 V, 6 A)) and discharge capacity of the lithium secondary battery measured after high-temperature storage into Equation 2 below,

the resistance increase rate was calculated by substituting an initial resistance value measured before high-temperature storage and a resistance value measured after high-temperature storage into Equation 3 below, and the volume change rate was calculated by substituting an initial volume before high-temperature storage and a volume after high-temperature storage, which were measured by a buoyancy method, into Equation 4 below.

[Equation 2]

$$\text{Capacity retention}(\%) = (\text{discharge capacity after high-temperature storage/discharge capacity before high-temperature storage}) \times 100$$

[Equation 3]

$$\text{Resistance increase rate}(\%) = \{(\text{resistance value after high-temperature storage-initial resistance value})/\text{initial resistance value}\} \times 100$$

[Equation 4]

$$\text{Volume change rate}(\%) = \{(\text{volume after high-temperature storage-initial volume})/\text{initial volume}\} \times 100$$

[Table 2]

| | Capacity retention (%) | Resistance increase rate (%) | Volume increase rate (%) |
|---|---|---|---|
| Example 1 | 92.4 | 10.3 | 5.4 |

(continued)

|  | Capacity retention (%) | Resistance increase rate (%) | Volume increase rate (%) |
|---|---|---|---|
| Comparative Example 7 | 78.1 | 30.5 | 34.5 |

According to the results of Table 2, when the non-aqueous electrolyte solution containing $LiPF_6$ and LiFSI, as the lithium salt, and containing DEC and FEC, as the organic solvent, was used in the lithium secondary battery including the silicon-based negative electrode active material, it may be confirmed that high-temperature life and storage characteristics of the lithium secondary battery including 1,3-propanesultone (PS) as the additive (Example 1) were significantly better than those of the lithium secondary battery including fluorobenzene (Comparative Example 7).

The reason for this is that the 1,3-propanesultone (PS) not only had an effect of stabilizing the SEI of the Si negative electrode, but also had an effect of preventing the SEI and CEI collapse phenomenon that occurred during high-temperature storage by forming a stable film in the form of $Li_2SO_3$ on the positive electrode.

**Claims**

1.   A lithium secondary battery comprising:

a positive electrode including a positive electrode active material; a negative electrode including a negative electrode active material; a separator disposed between the positive electrode and the negative electrode; and a non-aqueous electrolyte solution,
wherein the non-aqueous electrolyte solution comprises a lithium salt including $LiPF_6$ and $LiN(FSO_2)_2$; an additive including a sultone-based compound; and an organic solvent including a non-fluorine-based linear carbonate solvent and a fluorine-based cyclic carbonate solvent, and
the negative electrode active material consists of a silicon-based material.

2.   The lithium secondary battery of claim 1, wherein a molar ratio of the $LiPF_6$ to the $LiN(FSO_2)_2$ in the non-aqueous electrolyte solution is in a range of 1:1 to 1:3.

3.   The lithium secondary battery of claim 1, wherein the fluorine-based cyclic carbonate solvent is fluoroethylene carbonate (FEC).

4.   The lithium secondary battery of claim 1, wherein the non-fluorine-based linear carbonate solvent is diethyl carbonate (DEC).

5.   The lithium secondary battery of claim 1, wherein a volume ratio of the non-fluorine-based linear carbonate solvent to the fluorine-based cyclic carbonate solvent is in a range of 70:30 to 95:5.

6.   The lithium secondary battery of claim 5, wherein the volume ratio of the non-fluorine-based linear carbonate solvent to the fluorine-based cyclic carbonate solvent is in a range of 85:15 to 95:5.

7.   The lithium secondary battery of claim 1, wherein the silicon-based material is at least one selected from silicon (Si) and $SiO_x$ (0<x<2).

8.   The lithium secondary battery of claim 7, wherein the silicon-based material is Si.

9.   The lithium secondary battery of claim 1, wherein a concentration of the lithium salt in the non-aqueous electrolyte solution is in a range of 0.5 M to 3.0 M.

10.   The lithium secondary battery of claim 1, wherein the sultone-based compound is 1,3-propane sultone.

[FIG. 1]

[FIG. 2]

SiO 5.5%

[FIG. 3]

## INTERNATIONAL SEARCH REPORT

| International application No. |
|---|
| **PCT/KR2021/011832** |

**A. CLASSIFICATION OF SUBJECT MATTER**

**H01M 10/0569**(2010.01)i; **H01M 10/0568**(2010.01)i; **H01M 10/0567**(2010.01)i; **H01M 4/38**(2006.01)i; **H01M 4/48**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0569(2010.01); H01M 10/052(2010.01); H01M 10/0525(2010.01); H01M 10/0567(2010.01); H01M 10/0568(2010.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비수 전해액 (non-aqueous electrolyte), LiPF6, LiN(FSO2)2, 설톤 (sulton), 선형 카보네이트 (linear carbonate), 환형 카보네이트 (cyclic carbonate), 실리콘 (silicone)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0051786 A (CENTRAL GLASS COMPANY, LIMITED) 13 May 2020 (2020-05-13)<br>See claims 1, 5 and 7-10; and paragraphs [0086], [0087], [0090]-[0093], [0102] and [0149]. | 1-10 |
| X | KR 10-2020-0053565 A (CENTRAL GLASS COMPANY, LIMITED) 18 May 2020 (2020-05-18)<br>See claims 1-9; and paragraphs [0024]-[0028], [0060]-[0071] and [0114]-[0118]. | 1-10 |
| X | KR 10-2019-0014711 A (SAMSUNG SDI CO., LTD.) 13 February 2019 (2019-02-13)<br>See claims 1-10; and paragraphs [0019]-[0024] and [0027]-[0031]. | 1-10 |
| X | KR 10-2018-0106971 A (LG CHEM, LTD.) 01 October 2018 (2018-10-01)<br>See paragraphs [0055]-[0057], [0096], [0113] and [0127]. | 1-10 |
| X | KR 10-2020-0001837 A (SK CHEMICALS CO., LTD.) 07 January 2020 (2020-01-07)<br>See abstract; claims 1-12; and paragraphs [0022]-[0034]. | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 December 2021** | **07 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

| INTERNATIONAL SEARCH REPORT<br>Information on patent family members | | International application No.<br>**PCT/KR2021/011832** |
|---|---|---|

| Patent document<br>cited in search report | | | Publication date<br>(day/month/year) | Patent family member(s) | | | Publication date<br>(day/month/year) |
|---|---|---|---|---|---|---|---|
| KR | 10-2020-0051786 | A | 13 May 2020 | CN | 111095657 | A | 01 May 2020 |
| | | | | EP | 3678249 | A1 | 08 July 2020 |
| | | | | JP | 2019-053983 | A | 04 April 2019 |
| | | | | US | 2020-0313236 | A1 | 01 October 2020 |
| | | | | WO | 2019-054417 | A1 | 21 March 2019 |
| KR | 10-2020-0053565 | A | 18 May 2020 | CN | 111066193 | A | 24 April 2020 |
| | | | | EP | 3678250 | A1 | 08 July 2020 |
| | | | | JP | 2019-053984 | A | 04 April 2019 |
| | | | | US | 2020-0287241 | A1 | 10 September 2020 |
| | | | | WO | 2019-054418 | A1 | 21 March 2019 |
| KR | 10-2019-0014711 | A | 13 February 2019 | CN | 110870126 | A | 06 March 2020 |
| | | | | US | 2021-0159541 | A1 | 27 May 2021 |
| | | | | WO | 2019-027127 | A1 | 07 February 2019 |
| KR | 10-2018-0106971 | A | 01 October 2018 | CN | 110168797 | A | 23 August 2019 |
| | | | | EP | 3528332 | A2 | 21 August 2019 |
| | | | | EP | 3528332 | B1 | 02 June 2021 |
| | | | | US | 1139507 | B2 | 05 October 2021 |
| | | | | US | 2019-0356021 | A1 | 21 November 2019 |
| | | | | WO | 2018-169371 | A2 | 20 September 2018 |
| | | | | WO | 2018-169371 | A3 | 13 December 2018 |
| KR | 10-2020-0001837 | A | 07 January 2020 | None | | | |

Form PCT/ISA/210 (patent family annex) (July 2019)

**EP 4 080 638 A1**

**REFERENCES CITED IN THE DESCRIPTION**

**Patent documents cited in the description**

- KR 1020200112457